# EUROPEAN PATENT APPLICATION

(11) **EP 3 862 256 A1**
(43) Date of publication of application: **11.08.2021**
(21) Application number: 21155151.0
(22) Date of filing: 04.02.2021
(51) Int. Cl.: B62M 6/55, B62M 11/14

(54) **ELECTRIC BICYCLE GEARBOX**

(30) Priority: 06.02.2020 EP 20155975; 26.02.2020 EP 20182726
(71) Applicant: Illinois Tool Works INC., Glenview, IL 60025 (US)
(72) Inventor: MARTIN, Lionel, Illinois, 60025 (US); RICHARD, Didier, Illinois, 60025 (US)
(74) Representative: HGF

(57) **Abstract**

An electric bicycle gearbox (1) comprising a planetary gear system (3) and an auxiliary motor (8). The planetary gear system (3) comprises an input gear (6) configured to receive a drive input, an output gear (7) and a planet carrier (4) supporting a plurality of satellite gears (5). The satellite gears (5) are configured to transfer drive from the input gear (6) to the output gear (7). The auxiliary motor (8) is coupled to the planetary gear system and configured to rotate the input gear (6) or the planet carrier (4) relative to the drive input to vary the gear ratio between the drive input and an output of the planetary gear system (3).

## Description

### Field of the Invention

The present invention relates to a gearbox. In particular, the invention relates to a gearbox for an electric bicycle. Certain examples of the present invention relate to an electric bicycle gearbox capable of providing continuously variable transmission.

### Background

Electric bicycles have an electric motor which provides power to a wheel of the bicycle. Typically, this is incorporated into the bicycle such that the electric motor supplements the power supplied to a pedal crankshaft by a user pedalling). The bicycle may be limited such that the motor only provides additional drive while the user is pedalling, and the maximum speed at which the motor drives the pedal crankshaft may be limited. This limitation may be in response to legal restrictions imposed in different countries: for instance, an limit of 25 kph for motor assistance is common in many European countries. A freewheel or clutch arrangement may be provided between the motor and the crankshaft such that the motor may be disengaged if the user chooses to pedal the bicycle to speeds beyond the limit of the motor.

A conventional electric bicycle includes an electric motor incorporated into, or coupled to, the bicycle frame close to the bicycle bottom bracket (that is, where the pedal crankshaft is coupled to the frame). The electric motor is coupled to the pedal crankshaft via one or more gears. As the user pedals the bicycle, the speed of the electric motor is varied in order to match the user's pedalling cadence (pedal crankshaft revolutions per minute, RPM). A chain pinion is fixed to the pedal crankshaft and drive is transferred to the rear wheel via a chain extending between the chain pinion and a rear wheel (alternatively, a drivebelt may be used). Accordingly, drive provided both by the electric motor and the user pedalling is transferred to the rear wheel to propel the bicycle. The speed of the bicycle is dependent upon the user's cadence and the size of the rear wheel. Typically, selective gears are provided at the rear wheel in order to allow the user to cycle at different speeds for a given cadence. This may be through a derailleur gear or a hub gear incorporated into the rear wheel hub, both of which are known for unpowered bicycles.

Providing selective gears at the rear wheel for an electric bicycles adds additional weight and complexity to the drivetrain. Additionally, derailleur gears in particular are susceptible to damage as they are not normally enclosed. Furthermore, conventional gearing arrangements provide only a limited range of discrete gearing options which may lead to a non-optimal gear selection for the user according to the cycling terrain and conditions.

It is an object of the present invention to provide an electric bicycle gearbox that obviates or mitigates one or more the problems identified above.

### Summary of Invention

According to the present invention there is provided an electric bicycle gearbox comprising: a planetary gear system comprising: an input gear configured to receive a drive input; an output gear; and a planet carrier supporting a plurality of satellite gears, the satellite gears being configured to transfer drive from the input gear to the output gear; and an auxiliary motor coupled to the planetary gear system and configured to rotate the input gear or the planet carrier relative to the drive input to vary the gear ratio between the drive input and an output of the planetary gear system.

In certain examples a main assistance motor is provided to provide additional drive to supplement a user pedalling. The main assistance motor may be incorporated into the gearbox or it may be separately provided. Either or both of the gearbox and the main assistance motor may be incorporated into or directly coupled into a wheel of a bicycle, either in the same wheel or at separate wheels.

Advantageously, the present invention provides an electric bicycle gearbox that enables continuously variable transmission. The continuously variable transmission gearbox may be incorporated into the bottom bracket arrangement of a bicycle, thereby removing the need for selective gears to be provided. This may result in weight or cost reduction. In an alternative, the gearbox may be incorporated into or coupled to a wheel of the bicycle. For instance, part or the whole of the gearbox may be incorporated into a wheel hub, or coupled to the wheel hub.

Continuously variable transmission solves the problem of conventional bicycles (unpowered and electric) providing only a limited range of discrete gears. Examples of the present invention provide for continuously variable transmission in which a gearing ratio between pedalling speed and the output from the gearbox may be continuously adjusted within a set range. In many situations this may remove the need for additional selective gearing to be provided (for instance, at the rear wheel). However, in certain examples additional selective gearing may be provided, for instance to enable a high range and a low range, within which continuously variable transmission is provided.

Certain examples of the invention provide continuously variable transmission through the combination of a planetary gear system and an auxiliary motor. Advantageously, the torque of a gear train is split between the satellite gears within a planetary gear system, thereby reducing the torque force acting on the individual satellite gears. Accordingly, the torque may be reduced to such an extent that lighter and cheaper (albeit weaker) materials may be used, relative to the conventional use of metal for bicycle gears. That is, in certain examples of the invention provide the advantage that the gear train may include plastic gears, thereby reducing the weight of the electric bicycle.

Continuously variable transmission is provided through an auxiliary motor (in addition to the main assistance motor that is intended to provide drive to the bicycle). In some examples as well as providing variable transmission, the auxiliary motor also provides drive to the bicycle. That is, the bicycle driving force comprises the power provided by the user cycling, plus the power output provided by the main assistance motor and the power output provided by the auxiliary motor (subject of course to the efficiency of the gearbox).

Certain examples of the present invention comprise the main assistance motor being located at either the rear wheel or the front wheel. This may be the same wheel to which pedalling drive is transferred from the pedal crankshaft via the gearbox, or it may be a different wheel. Accordingly, there may be no need for there to be a freewheel located between the main assistance motor and the wheel, which enable the main assistance motor to be used for regenerative braking.

A continuously variable transmission gearbox according to certain examples of the present invention provides for more efficient speed variation that is more easily managed by the user. Moreover, in some examples, the speed variation is managed by a central processing unit or a controller that determines the speed variation as a function of the torque on the pedals, and the bicycle speed. The new design for the continuously variable transmission gearbox finds an effective compromise between power and speed, so as to limit power consumption. The reduction in power consumption increases the range of the bicycle. Furthermore, the continuously variable transmission gearbox provides a quicker gear change with reduced mechanical movement, which may be more convenient and comfortable for the user.

Further advantages and optional features of the present invention will be apparent from the detailed description of examples of the invention.

### Brief Description of the Drawings

Examples of the invention are further described hereinafter with reference to the accompanying drawings, in which:
Figure 1 illustrates a perspective view of a continuously variable transmission gearbox according to a first example, in an assembled configuration;
Figure 2 illustrates a schematic diagram of the continuously variable transmission gearbox of figure 1;
Figure 3 illustrates an exploded view of the continuously variable transmission gearbox of figure 1;
Figure 4 illustrates a section view of the continuously variable transmission gearbox of figure 1;
Figure 5 illustrates a performance characteristic graph for an electric bicycle according to one mode of operation;
Figure 6 illustrates a performance characteristic graph for an electric bicycle according to another mode of operation;
Figure 7 illustrates a performance characteristic graph for an electric bicycle according to a further mode of operation;
Figure 8 illustrates a performance characteristic graph for an electric bicycle according to a still further mode of operation;
Figure 9 illustrates a perspective view of a continuously variable transmission gearbox according to a second example, in an assembled configuration;
Figure 10 illustrates an exploded view of the continuously variable transmission gearbox of figure 9;
Figure 11 illustrates a section view of the continuously variable transmission gearbox of figure 9;
Figure 12 illustrates a perspective view of a continuously variable transmission gearbox according to a third example, in an assembled configuration and coupled via a chain to a rear wheel of an electric bicycle;
Figure 13 illustrates an alternative perspective view of the continuously variable transmission gearbox of figure 12 with the rear wheel removed;
Figure 14 illustrates an exploded view of the continuously variable transmission gearbox of figure 12; and
Figure 15 illustrates a section view of the continuously variable transmission gearbox of figure 12.

In the drawings like reference numerals refer to like parts.

### Detailed Description

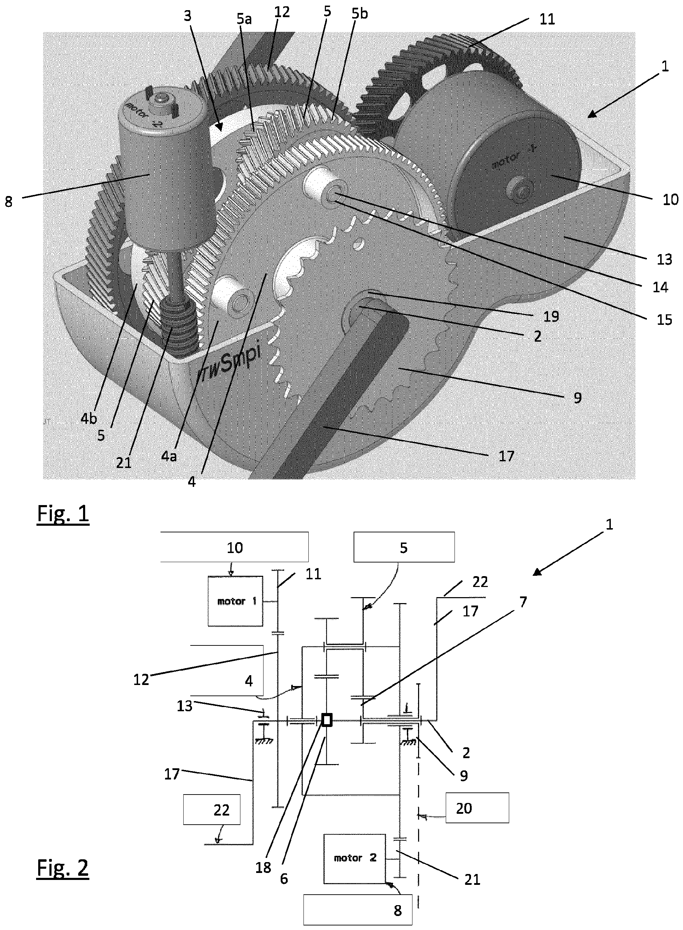

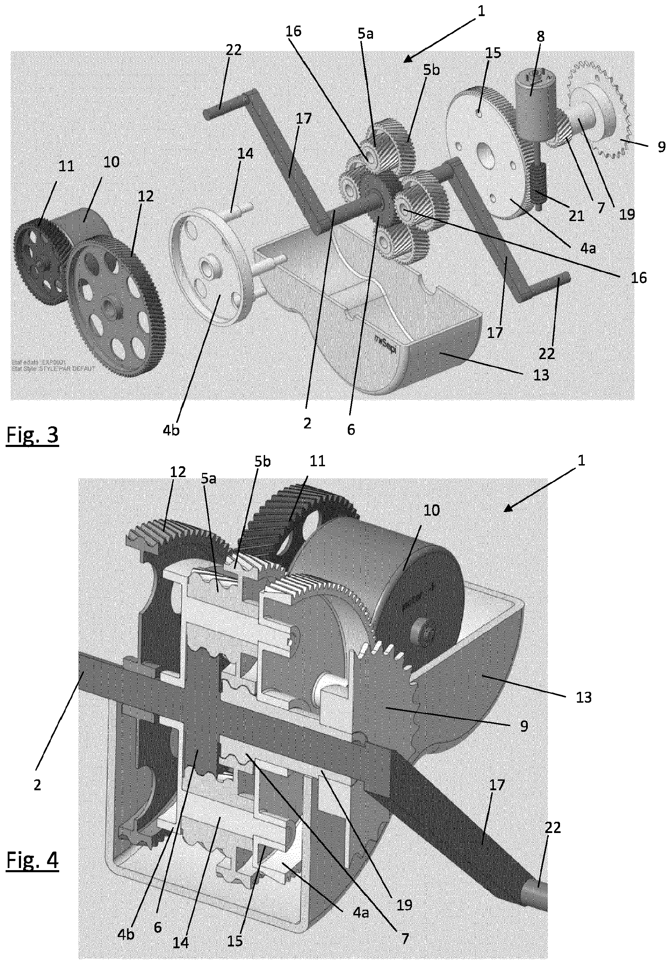

Referring to figures 1 to 4, these figures illustrate a continuously variable transmission gearbox 1 for an electric bicycle according to a first example of the present invention. Figure 1 illustrates the gearbox 1 in a perspective view, in an assembled configuration, except that an upper part of a housing 13 has been cut away to reveal the interior of the gearbox 1 (the housing is also cut away in figures 3 and 4). The gearbox 1 is shown removed from a bicycle. It will be understood that the gearbox 1 will be located upon or within a frame of the bicycle such that the pedal crankshaft 2 is located in a conventional position relative to the other user contact points (saddle and handlebars). The output from the gearbox 1, via chain pinion 9 provides drive to a rear wheel of the bicycle. While the specific example of a chain pinion and chain for transferring drive a wheel of a bicycle is used in certain examples of the present invention, the skilled person will appreciate that any other conventional arrangement for transferring drive, such as a drivebelt may be used. As the present invention is concerned only with the gearbox 1, and other parts of the bicycle may be conventional or suitably adapted to fit with the gearbox 1, remaining components of the bicycle are not illustrated or further described, except as necessary to explain the functioning of the gearbox 1.

Figure 2 comprises a schematic diagram of gearbox 1, to assist the readers understanding of the interconnections of the various internal components of the gearbox 1. Similarly, figure 3 comprises an exploded view of the gearbox 1 and figure 4 is a section view of the gearbox 1 in a vertical plane coincident with the longitudinal axis of the pedal crankshaft 2.

The electric bicycle gearbox 1 illustrated in figures 1 to 4 comprises a pedal crankshaft 2, a planetary gear system 3 and an auxiliary motor 8. The planetary gear system 3 comprises a planet carrier 4, comprising parts 4a, 4b, supporting a plurality of satellite gears 5, an input gear 6 configured to transfer drive from the pedal crankshaft 2 to the satellite gears 5 and an output gear 7 receiving drive from the satellite gears 5. The gearbox thus comprises an epicycloid gear train assembly

The planet carrier 4 is formed in two parts 4a, 4b, with the satellite gears 5 sandwiched therebetween. As best illustrated in figures 3 and 4, part 4b of the planet carrier comprises pins 14 that extend towards and engage holes 15 in the other part 4a. Furthermore, each satellite gear 5 is formed in a tubular fashion and a corresponding pin 14 passes through a central bore 16 within the satellite gear 5 such that that satellite gear 5 may freely rotate about the pin 14 relative to the planet carrier 4. When assembled, the planet carrier 4 surrounds and supports the satellite gears 5. Four satellite gears 5 are shown, though it will be appreciated that this is only an example and the number may vary.

The planet carrier 4 surrounds the pedal crankshaft 2 such that it may freely rotate about the pedal crankshaft 2. The pedal crankshaft 2 terminates at each end with a pedal arm 17, at the end of which (as illustrated in figures 2 to 4) is a pedal 22. The pedal crankshaft 2 extends through the gearbox housing 13 and will be appropriately supported on the housing 13 by bearings such that as the user pedals, the pedal crankshaft 2 rotates within the housing 13. As illustrated in the schematic of figure 2, input gear 6 is coupled to the pedal crankshaft 2 via a clutch or freewheel device 18. As the user pedals, and the crankshaft 2 rotates, drive is transferred to the input gear 6 through the freewheel 18. If the user stops pedalling, the freewheel 18 disengages and the input gear 6 is no longer coupled (to avoid the crankshaft 2 being driven in reverse by the planetary gear system 3). The input gear 6 is located within the planet carrier 4 - that is, between parts 4a and 4b. Each satellite gear 5 comprises a small cog portion 5a and a large cog portion 5b (best seen in figures 3 and 4). The input gear 6 engages and drives the small cog portion 5a of each satellite gear 5, such that as the user pedals and the crankshaft 2 (and hence input gear 6) rotates, each satellite gear 5 rotates relative to the planet carrier 4.

The planetary gear system 3 further comprises an output gear 7, located within the planet carrier 4 as seen in figure 4. The output gear 7 engages the large cog portion 5b of each satellite gear 5 and thus the output gear 7 is driven to rotate within the planet carrier 4. The output gear 7 is integrally formed with a spindle 19 which extends from the output gear 7 through a bore in planet carrier part 4a and couples to chain pinion 9. Accordingly, as the user pedals, drive is transferred from the crankshaft 2 through the planetary gear system 3 to the chain pinion 9. The chain pinion 9 is coupled to a chain 20 to transfer drive to the rear wheel of the bicycle in a conventional fashion (or a drivebelt may be used). This will not be further described.

The freewheel 18, planetary gear system 3, spindle 19 and chain pinion 9 are concentrically formed about the pedal crankshaft 2. The need for appropriate bearings (schematically illustrated in figure 2) will be apparent to the appropriately skilled person and readily provided. Furthermore, as illustrated in figure 2, the whole gearbox assembly is coupled to earth (that is, the frame of the bicycle) to provide isolation for the electric motors. Particularly, figure 2 shows that the housing 13 (where the pedal crankshaft 2 passes through) is earthed.

Assuming for the moment that the planet carrier 4 is kept stationary within the housing 13, a fixed gear ratio is maintained between the crankshaft 2 and the chain pinion 9 through the respective sizes of input gear 6, small cog portion 5a, large cog portion 5b and output gear 7. In the example illustrated in figures 1 to 4, this gear ratio (when the planet carrier 4 is stationary) is 1:2.7 (alternatively expressed as 1/2.7 or "1 to 2.7)(. It will be appreciated that this "default" gear ratio, where the planet carrier 4 is stationary may vary by appropriate specification of the respective gears such that the chain pinion 9 may rotate about the pedal crankshaft 2 faster or slower than the pedal crankshaft, or at the same rate.

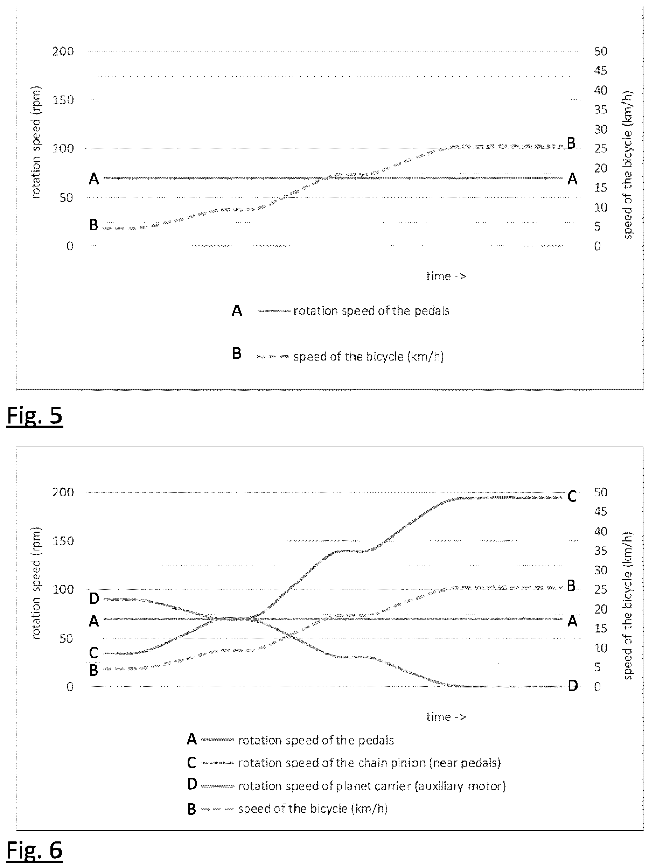

According to certain examples of the present invention, continuously variable transmission is provided by rotating the planet carrier 4 within the housing 13 and about the crankshaft 2. It will be appreciated that rotating the planet carrier 4 will increase or decrease the speed of output gear 7 according to the direction of rotation (relative to the drive direction of the crankshaft). In order to rotate the planet carrier 4, part 4a is formed as a cog including gear teeth about its periphery, and driven by an auxiliary motor 8 through worm drive 21. It will be appreciated that other ways of coupling the auxiliary motor 8 to the planet carrier 4 may be used, for instance using a standard gear coupled to the auxiliary motor 8. A worm drive allows for a large gear reduction between the auxiliary motor 8 and the planet carrier 4, and may also permit the auxiliary motor 8 to be positioned in a convenient orientation relative to the planetary gear system 3. However, the skilled person will appreciate that the efficiency of a worm gear and worm wheel may not be as high as a conventional gear, which if used could allow for lower energy consumption. Though the use of the auxiliary motor 8, the gear ratio may be increased or decreased relative to the default gear ratio for a stationary planet carrier 4, as will be described below in connection with figures 5 to 8 which illustrate different modes of operation.

The gearbox 1 illustrated in figures 1 to 4 further comprises a main assistance motor 10 which provides power assistance to the drive provided by the user pedalling. This renders it easier for the user to cycle at a given speed, as their cycling power is supplemented by the power of the main assistance motor 10 (as is conventional for electric bicycles). Main assistance motor 10 is coupled to the pedal crankshaft via a motor output gear 11 (fixed to the output shaft of the motor 10) and a transfer gear 12 coupled to and about the pedal crankshaft 2. The main assistance motor 10 is driven to match the cadence of the user pedalling, with a gear ratio between the main assistance motor 10 and the pedal crankshaft 2 selected by the respective size of gears 11 and 12. As the user pedals faster, the speed of main assistance motor 10 increases to match. This may be implemented through crankshaft sensors in a conventional fashion, that will not be further described. Accordingly, the drive provided to the planetary gear system 3 is equal to the power supplied by the user pedalling and the power supplied by the main assistance motor (subject to any efficiency loss in the gear transfer). In some examples there may be a further freewheel or clutch between the main assistance motor 10 and the crankshaft 2, to avoid backlash in the event that the user suddenly stops pedalling.

In some examples in addition to the auxiliary motor 8 providing for continuously variable transmission, the power of the auxiliary motor 8 may be transferred to the chain pinion 9 and hence the bicycle. That is, the power at the output gear 7 and the chain pinion 9 is a total of the power applied by the user on the pedals, the power of the main electric assistance motor 10 and, optionally, the power of the auxiliary motor 8. In the continuously variable transmission gearbox, the epicycloid gear train is used to facilitate continuously variable transmission as well as providing an effective transfer of power from the pedals and the main assistance motor. The rotation speed of the chain pinion 9 may be higher or lower than the speed of rotation of the pedal crankshaft 2. For example, a gearing ratio may be continuously adjusted in a range. The range, may for example be 1:0.75 to 1:2.78.

The gear ratio may be automatically adjusted in response to the terrain or the torque on the pedal crankshaft applied by the user. Alternatively, the gear ratio may be adjusted by the user, for instance through an input selector, dial, switch or potentiometer on the handlebars. In some examples the gear ratio may be automatically adjusted to find the optimal balance between power assistance and speed, to limit power consumption and increase cycling range. For instance, a reduction gear may advantageously increase range for motor assistance. The gearing may be adjusted even when the bicycle is stationary (unlike derailleur gears). The gearing may be adjusted only by changing the rotation speed of the auxiliary motor (once the user begins to pedal again) This may be desirable where the bicycle is used in an urban environment with frequent starting and stopping. In some examples the gear ratio may be automatically adjusted such that when the bicycle is stationary the gear ratio is reduced to a low level (or the minimum) making it easier for the user to pedal away from a stationary start. Removing the need for derailleur gears may make it easier to enclose the chain or drivebelt.

If the battery supplying the motors (or at least the auxiliary motor 8) is run down, then cycling remains possible with the gear ratio fixed to the default ratio (1:2.7 in the example of figures 1 to 4). In some examples a mechanical dog clutch may be added to the gearbox, permitting the output gear 7 to engage and disengage with different parts of the planetary gear system 3, to enable two different possible gear ratios (in the event that the auxiliary motor 8 is not operating).

A further advantage of the use of an epicycloid gear grain is that lighter materials can be used to manufacture component parts. This is because the planetary gear system splits the torque transferred from the pedal crankshaft between a plurality of satellite gears. Accordingly, due to the use of plural satellite gears, the torque transfer for each satellite gear may be reduced to within limits for lighter materials, such as plastics.

Turning now to figures 5 to 8, these illustrate performance characteristics graphs for various modes of operation. Figure 5 illustrates how the continuously variable transmission permits the speed of the bicycle to be varied smoothly while the user pedals at a steady cadence of 70 rpm (for example - the user may pedal at a different rate). The continuous speed variation may be managed by the user using a selector (for instance, one based on a potentiometer) on the bicycle handlebars, or may be automatic in response to sensed changes in gradient. The continuous speed variation may also or alternatively be managed by a computer as a function of the torque on pedals and the bicycle speed. Alternatively, power and speed may be automatically adjusted to limit power consumption. In a speed range from 0 to 25 kilometres per hour (kph) speed variations are determined by the continuously variable transmission. Where the speed of the bicycle exceeds 25 kilometres per hour, no further assistance from the main assistance motor may be provided (if this is prohibited by local regulations). The main assistance motor and the auxiliary motor are stopped, such that the gear ratio between the pedals and the wheels is fixed, for instance at a ratio of 1:2.78. As noted above, the gear ratio between the chain pinion 9 and the rear wheel may be fixed, for instance at 1:1 (although other fixed ratios are possible, and optionally the selective gears may be used as well at the rear wheel).

Figure 6 illustrates a further mode of operation in which speed variations of the bicycle are determined by varying the rotation speed of the auxiliary motor (again, presuming a steady pedalling speed of 70 rpm). The variation may be done automatically by a controller. Alternatively, the variations may be done manually by the user, or partially under the control of the user. Figure 6 shows the user pedalling at a constant speed and the bicycle speed increasing (as for the graph of figure 5). It can be seen that the rotation speed of the chain pinion increases in steps that correspond to the speed of the bicycle. The rotation speed of the planet carrier decreases until it reaches 0 rpm, which equates to a bicycle speed of 25 kph. Figure 6 shows that at more than 10 kph, the rotation speed of the chain pinion is higher than the rotation speed of the pedals. It will be appreciated that the particular respective rotation speeds and bicycle speeds illustrated are for one example gearbox, such as that of figure 1 to 4, and will vary according to the specification of the various components of the gearbox. As noted above, at 25 kph the main assistance motor is also disconnected. If the user wishes to cycle faster, they may do so by increasing their pedalling speed.

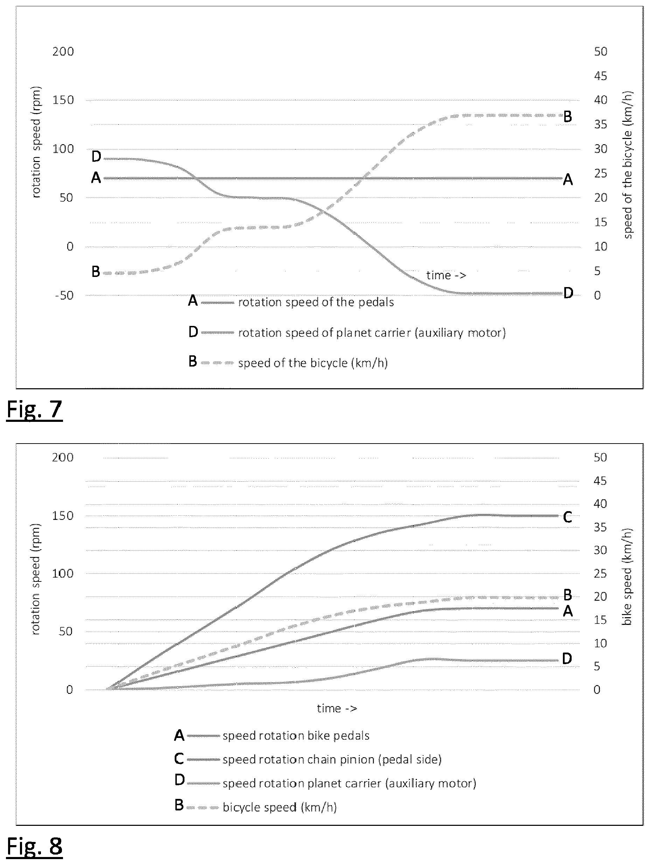

Figure 7 illustrates another mode of operation, in which assistance is still provided by a continuously variable transmission gearbox at a speed of over 25 kilometres per hour. If the direction of rotation of the auxiliary motor is reversed (indicated by a negative rotation speed for line D), it is found to be possible to increase the speed of the bicycle beyond 25 kilometres per hour. It is noted that this may be legally prohibited for operation on public roads.

Figure 8 illustrates a still further mode of operation in which the speed of the bicycle is varied from stationary to reaching 20 kph. The pedal speed is increased from 0 rpm to 70 rpm. The continuously variable transmission gear ratio is adjusted to support the user's acceleration. Increasing the gear ratio at a faster rate would result in faster acceleration, for a same profile of increasing pedal speed. The speed of the auxiliary motor may be varied as a function of the pedal speed.

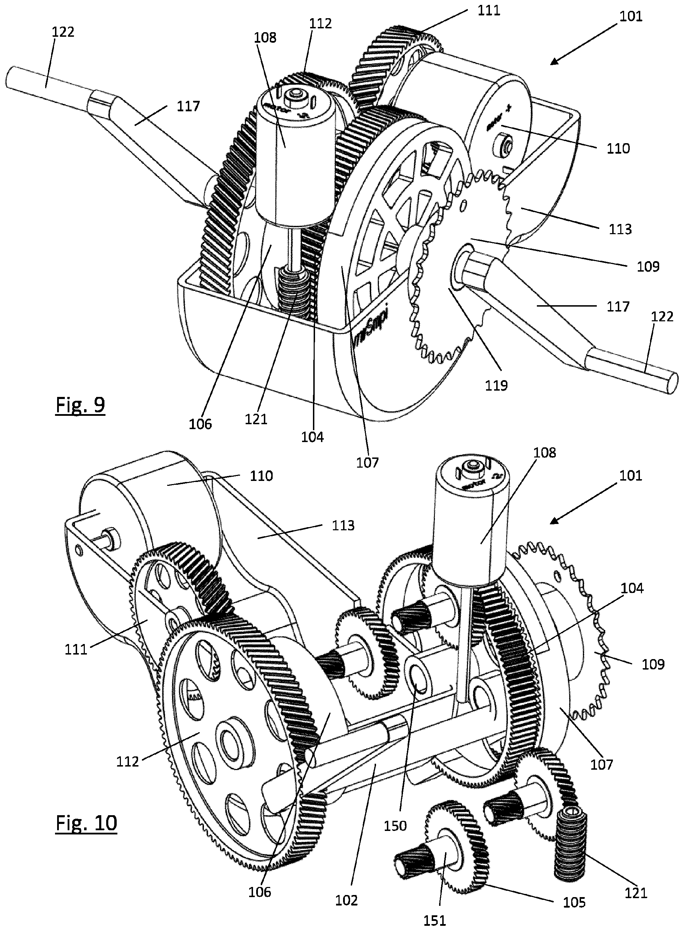

Referring now to figures 9 to 11, these illustrate another continuously variable transmission gearbox according to a second example of the present invention. In order to identify correspondence with the first example of figures 1 to 4, corresponding components are given the same reference numerals incremented by 100. Where a component is structurally and functionally the same or closely similar to that of the first example, it is not described again and reference should be made to the earlier description.

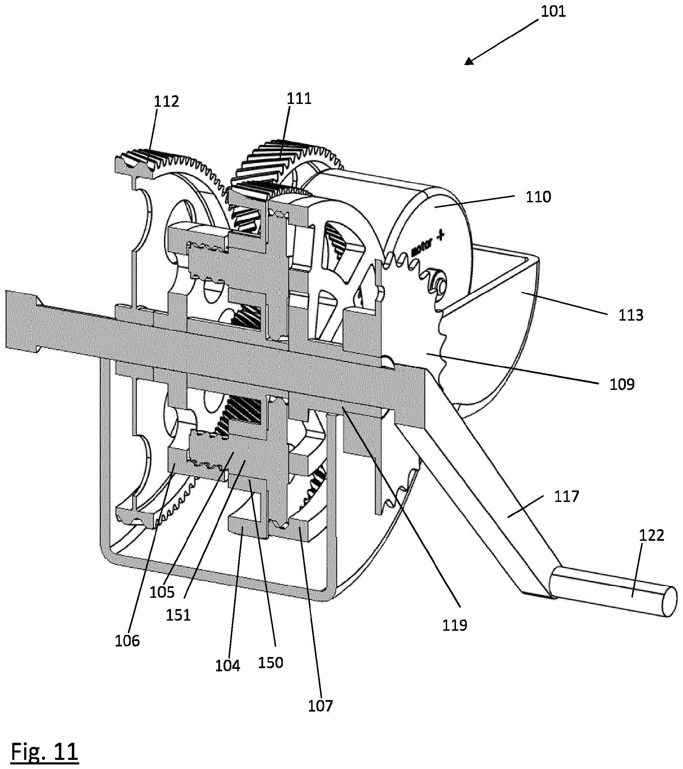

Figure 9 illustrates the gearbox 101 in a perspective view, in an assembled configuration, except that an upper part of a housing 113 has been cut away to reveal the interior of the gearbox 101 (the housing is also cut away in figures 10 and 11). Figure 10 comprises an exploded view of the gearbox 101 and figure 11 is a section view of the gearbox 101 in a vertical plane coincident with the longitudinal axis of the pedal crankshaft 102.

In the continuously variable transmission gearbox 101 of the second example, the four planetary gears 105 mesh with internal input and output gears 106, 107. Advantageously, the torque applied on the planet carrier in this example is 35% lower. As best illustrated in the cross sectional view of figure 11, the planet carrier 104 is formed from a single component (differing from the first example) in which there are provided a series of bores 150 to receive the satellite gears 105. That is, in the second example, the satellite gears 105 are inserted through the planet carrier 104, rather than the other way around, and include a smooth central portion 151 received in and rotating within the bore 150. Small cog portion 105a extends from a first side of the planet carrier 104 and large cog portion 105b extends from a second side of the planet carrier 104, and the input and output gears 106, 107 are provided on respective sides.

The planet carrier 104 is formed as a cog and includes gear teeth about its periphery, as for planet carrier portion 4a for the first example, and is engaged by worm gear 121 in the same way to provide continuously variable transmission.

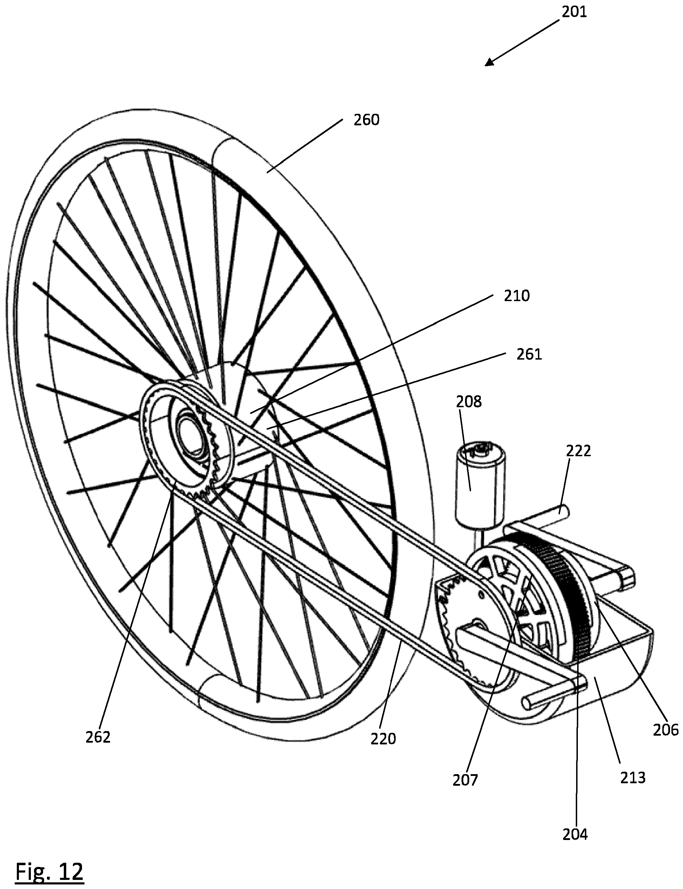

Referring now to figures 12 to 15, these illustrate a further continuously variable transmission gearbox according to a third example of the present invention. In order to identify correspondence with the second example of figures 9 to 11 (which is similar through the use of internal gears for the input gear 206 and the output gear 207), corresponding components are given the same reference numerals incremented by 100. Where a component is structurally and functionally the same or closely similar to that of the first or the second example, it is not described again and reference should be made to the earlier description.

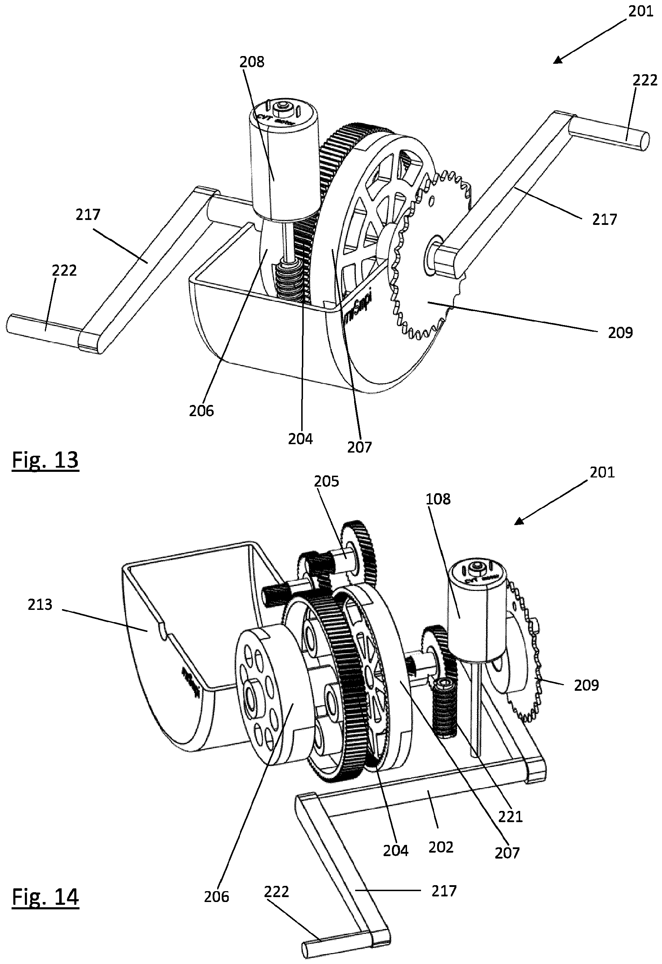

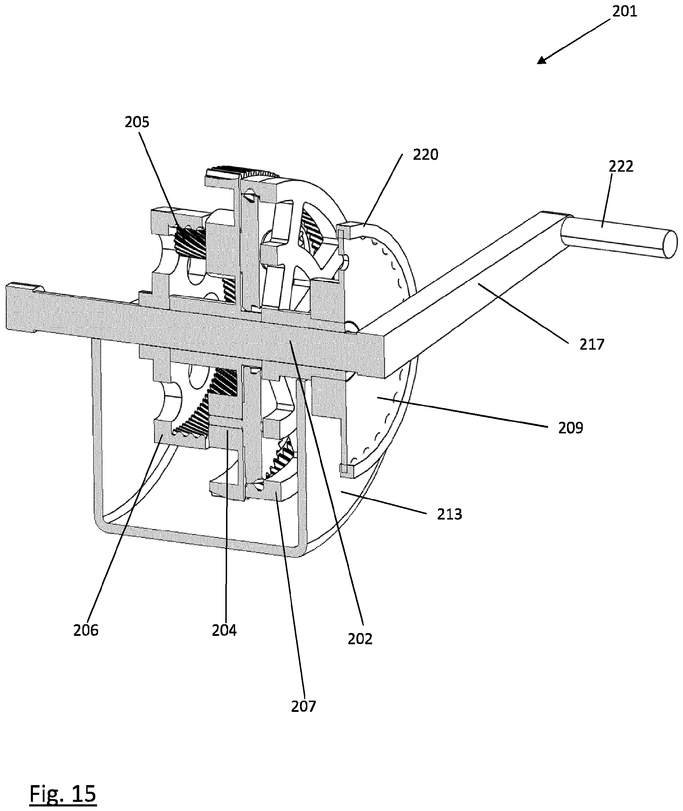

Figure 12 illustrates the gearbox 201 in a perspective view, in an assembled configuration, except that an upper part of a housing 213 has been cut away to reveal the interior of the gearbox 201 (the housing is also cut away in the remaining figures). Figure 12 also shows the rear wheel 260 of the bicycle. Figure 13 is an alternative perspective view of the gearbox 201 with the rear wheel removed. Figure 14 comprises an exploded view of the gearbox 201 and figure 15 is a section view of the gearbox 201 in a vertical plane coincident with the longitudinal axis of the pedal crankshaft 202.

The third example differs from the second example in that the main assistance motor 210 (and also the motor output gear and the transfer gear) have been removed from the gearbox 201. Accordingly, the power output from the gearbox 201 is provided by the user's input power through the pedals and optionally any power contribution made by the auxiliary motor 208.

In the third example, as shown particularly in figure 12, the main assistance motor 210 is instead incorporated in a hub 261 of the rear wheel 260. The chain 220 transfers drive from the chain pinion 209 to the rear wheel 260 via a chain sprocket 262. The main assistance motor 210 is also directly coupled to the chain sprocket 262 or the rear wheel 260 and provides additional power to the rear wheel 260 over and above that provided by the user pedalling. The speed of the main assistance motor 210 may be matched to that of the rear wheel 260. Advantageously, because the main assistance motor 210 is coupled directly to the rear wheel 260 without any intervening freewheel, this enables the main assistance motor to be used for regenerative braking. Particularly, when the user stops pedalling, and the chain slows or stops, the main assistance motor 210 stops providing drive to the rear wheel 260, and instead operates in reverse as a dynamo to recharge a bicycle battery (not illustrated). The arrangement of the main assistance motor 210 and the auxiliary motor 208 according to the third example of the present invention enables the provision of continuously variable transmission and regenerative braking in combination.

In the examples of the present invention disclosed above, the continuously variable transmission is provided by rotating the planet carrier relative to an input shaft (particularly, the pedal crankshaft). However, the skilled person will appreciated that his is not the only implementation option. For instance, the auxiliary motor may couple to the input gear such that it rotates the input gear relative to the pedal crankshaft (that is, so that the input gear rotates faster or slower - or the same speed - as the pedal crankshaft). The effect in terms of varying the gear ratio between the input shaft and the output gear is the same.

In the examples of the present invention disclosed above, the gearbox, particularly the planetary gear system, is located with (that is, about) the pedal crankshaft, and drive is transferred to a rear wheel of the bicycle through a chain or drivebelt. The main assistance motor may be located either in the gear box or at the rear wheel to supplement drive provided by the user pedalling. However, the skilled person will appreciate that this is not the only implementation option.

According to a first alternative, the gearbox may be located with the pedal crankshaft and transfer drive from the user pedalling (with a continuously varying gear ratio) to a first wheel of the bicycle. The main assistance motor may be located at a second wheel of the bicycle such that there is no direct connection between the user pedalling and the supplementary drive provided by the main assistance motor. In this example the main assistance motor may be coupled to or incorporate sensors to detect when the user is pedalling the bicycle (or otherwise, the bicycle is moving) and to provide supplementary drive to match the bicycle speed.

According to a second alternative, the gearbox including the auxiliary motor may be incorporated into or coupled to a hub of a bicycle wheel. For instance, the pedal crank shaft may be coupled to a chain pinion or pulley wheel to transfer pedalling drive through a chain or drive belt to that wheel (with a fixed gear ratio) whereupon the gearbox provides continuously variable transmission within the wheel hub, or coupled to the hub of the wheel. The main assistance motor may be coupled to the gearbox or may be located at a second wheel of the bicycle to provide supplementary drive as described above for the first alternative.

According to a third alternative the main assistance motor may be coupled to a pedal crankshaft to provide additional drive to supplement the user pedalling, while the planetary gear system and the auxiliary motor are provided at a driven wheel of the bicycle in order to provide continuously variable transmission.

It will be clear to a person skilled in the art that features described in relation to any of the examples described above can be applicable interchangeably between the different examples. The examples described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers and characteristics described in conjunction with a particular aspect, example or example of the invention are to be understood to be applicable to any other aspect, example or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing examples. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. An electric bicycle gearbox comprising:
a planetary gear system comprising:
an input gear configured to receive a drive input;
an output gear; and
a planet carrier supporting a plurality of satellite gears, the satellite gears being configured to transfer drive from the input gear to the output gear; and
an auxiliary motor coupled to the planetary gear system and configured to rotate the input gear or the planet carrier relative to the drive input to vary the gear ratio between the drive input and an output of the planetary gear system.

2. An electric bicycle gearbox according to claim 1, further comprising a pedal crankshaft coupled to the input gear to transfer the drive input to the input gear.

3. An electric bicycle gearbox according to claim 2, wherein the planetary gear system is concentric with the pedal crankshaft.

4. An electric bicycle gearbox according to claim 2 or claim 3, wherein the input gear is coupled to the pedal crankshaft via a freewheel or clutch such that drive is transferred from the pedal crankshaft to the input gear in a first direction of rotation, and the input gear is disengaged if the pedal crankshaft stops rotating.

5. An electric bicycle gearbox according to any one of the preceding claims, further comprising a main assistance motor configured to provide supplementary drive to the input gear.

6. An electric bicycle gearbox according to claim 5 when dependent on claim 2, wherein the main assistance motor is coupled to the pedal crankshaft to supplement drive provided by a user through pedals coupled to the pedal crankshaft.

7. An electric bicycle gearbox according to claim 6, wherein the main assistance motor is coupled to the pedal crankshaft via a motor output gear and an intermediary gear mounted on the pedal crankshaft such that the main assistance motor output shaft is offset from the pedal crankshaft.

8. An electric bicycle gearbox according to any one of the preceding claims, wherein an outer portion of the planet carrier is formed as a cog and the auxiliary motor engages the cog through a worm drive or a gear in order to rotate the planet carrier.

9. An electric bicycle gearbox according to any one of the preceding claims, further comprising a housing configured to enclose the auxiliary motor and the planetary gear system.

10. An electric bicycle comprising:
a gearbox according to any one of the preceding claims;
a pinion coupled to the output gear to transfer drive to a chain or drivebelt; and
a sprocket mounted on a wheel of the bicycle to transfer drive from the chain or drivebelt to the wheel.

11. An electric bicycle comprising:
a gearbox according to any one of claims 1 to 4;
a pinion coupled to the output gear to transfer drive to a chain or drivebelt;
a sprocket mounted on a wheel of the bicycle to transfer drive from the chain or drivebelt to the wheel; and
a main assistance motor coupled to the wheel to provide drive to the wheel supplementing drive provided by the chain or drivebelt.

12. An electric bicycle according to claim 11, wherein the main assistance motor is configured such that if the user ceases pedalling it operates as a dynamo to provide regenerative braking.

13. An electric bicycle comprising:
a gearbox according to claim 1; and
a wheel;
wherein the gearbox is incorporated into or couple to the wheel such that the output gear is configured to drive the wheel to propel the bicycle.

14. An electric bicycle according to claim 13, further comprising a sprocket coupled to the wheel or the gearbox and configured to transfer drive from a chain or drivebelt to the input gear.

15. An electric bicycle according to claim 13 or claim 14, wherein the gearbox further comprises a main assistance motor to provide supplementary drive to the input gear; or
wherein the bicycle further comprises a main assistance motor coupled to a wheel of the bicycle to provide drive to the wheel.
